# EUROPEAN PATENT APPLICATION

(11) **EP 1 571 574 A1**
(43) Date of publication of application: **07.09.2005**
(21) Application number: 05003299.4
(22) Date of filing: 16.02.2005
(51) Int. Cl.: G06F 17/60

(54) **Email system**

(30) Priority: 23.02.2004 JP 2004045707
(71) Applicant: Aruze Corp., Tokyo (JP); Seta Corporation, Tokyo 135-0063 (JP)
(72) Inventor: Ino, Toshiaki, Tokyo (JP); Kobayashi, Tokuji, Tokyo (JP); Okamoto, Yojiro, Tokyo (JP)
(74) Representative: Prechtel, Jörg

(57) **Abstract**

The present invention is an email system which has an email distribution system server that distributes email to specified addresses on the basis of terminal discriminating information for various types of terminals (12, 14) constituting the transmission sources and transmission destinations of the email. The email distribution system server 2 has a gateway (GW) 4 which performs specified processing on the email, a mail server (MTA) 6 which performs the transmission and reception of the email, a data base (e. g., a DB for mail distribution use) 8 which registers the terminal discriminating information for the various types of terminals, and a mail distribution server (Front MTA) 10 which distributes the email to the gateway or the mail server on the basis of the terminal discriminating information. As a result, a new service can be provided while utilizing an existing system "as is".

## Description

### BACKGROUND OF THE INVENTION

### Field of the Invention

The present invention relates to an email system which provides various services such as storing email in specified directories, transmitting email to destination servers, or eliminating viruses that are parasitic on email, on the basis of mail addresses.

### Description of the Prior Art

Currently, the internet has spread as an extremely large network in which computer networks (LANs (local area networks) and WANs (wide area networks)) dispersed in various regions are connected to each other by dedicated lines, and has made it possible to utilize various services. The internet is an open network to which anyone can make a connection; however, in order to utilize the services of the internet, it is necessary to connect to a server constituting the internet as a client (terminal). For instance, persons belonging to an educational organization, group, enterprise or the like which has a server can utilize the internet via an LAN; however, internet service providers (hereafter abbreviated to "ISP") can provide the necessary equipment and various types of peripheral services so that even enterprises or individuals that do not have servers can utilize the internet.

One example of a service provides by ISPs is a mail service which allows connection to the internet from a general telephone circuit, and which assigns separate mail addresses to respective clients (terminals); in this service, when a connection contract is concluded with the ISP, a user ID (identification), connection password, mail address and the like are provided. Subsequently, the client can utilize the provided mail address to transmit and receive email via the email system of the ISP (e. g., a mail server comprising an SMTP (simple mail transfer protocol) server and a POP (post office protocol) server). For instance, email is transmitted to destination terminals via the internet from the SMTP server, and email from other networks is transferred via the POP server.

There may be cases in which programs called computer viruses are incorporated into email that is thus transmitted or received via such an ISP. In such cases, for example, the following problems may arise: namely, the email itself that is transmitted or received may be destroyed, the system of the terminal that transmits or received the virus-contaminated email may be destroyed, or the like.

In order to prevent the occurrence of such problems in advance, there are cases in which a new service for the purpose of checking for viruses such as that shown (for example) in Japanese Unexamined Patent Publication No. 2002-108778 is provided. In such cases, a server used for the new service (i. e., a virus checking server) is installed along with the abovementioned email system (mail server), and in the case of a client with a new contract, after the server with which a contract is to be concluded is selected, notification is made of this server, and the mail system is set for the client.

In this case, clients that have already concluded a contract with the abovementioned email system (mail server) must newly conclude a contract with the virus checking server in order to receive virus checking in the middle of the contract period, and the mail system between the terminal and the virus checking server must be rest; accordingly, the trouble, time and cost of this are borne by the client himself.

Furthermore, in cases where a virus checking service is to be newly performed by an ISP that does not have a virus checking server, a virus checking server must be newly added in addition to the existing email system (mail server), and the trouble, time and cost of this are borne by the ISP itself.

In cases where an attempt is thus made to provide a new service (e. g., a virus checking service) in an existing email system, the trouble, time and cost of this service are borne by both the client and the ISP; accordingly, in order to eliminate such a problem, there is a demand for an email system construction which makes it possible to provide a new service utilizing an existing system "as is".

### SUMMARY OF THE INVENTION

The present invention is devised in order to meet such a demand; it is an object of the present invention to construct an email system which makes it possible to provide a new service utilizing an existing system "as is".

In order to achieve this object, the present invention is an email system which has an email distribution system server 2 that distributes email to specified addresses on the basis of terminal discriminating information for various types of terminals (12, 14) constituting the transmission sources and transmission destinations of the abovementioned email, the abovementioned email distribution system server comprising a gateway (GW) 4 which performs specified processing on the abovementioned email, a mail server (MTA) 6 which performs the transmission and reception of the abovementioned email, a data base (e. g., a DB for mail distribution use) 8 which registers the terminal discriminating information for the abovementioned various types of terminals, and a mail distribution server (front MTA) 10 which distributes the abovementioned email to the abovementioned gateway or the abovementioned mail server on the basis of the abovementioned terminal discriminating information.

In this invention, terminals for which the abovementioned terminal discriminating information is registered in the abovementioned data base are designated as registered terminals, and terminals for which the abovementioned terminal discriminating information is not registered in the abovementioned data base are designated as non-registered terminals, the abovementioned email that is transmitted from the abovementioned registered terminals is distributed to the abovementioned gateway by the abovementioned mail distribution server, and is then subjected to specified processing by the abovementioned gateway and sent out to the abovementioned mail server, and the abovementioned email that is transmitted from the abovementioned non-registered terminals is distributed to the abovementioned mail server by the abovementioned mail distribution server without being caused to pass through the abovementioned gateway.

Furthermore, the abovementioned terminal discriminating information contains at least the IP addresses of the abovementioned various types of terminals, and the user IDs, passwords and mail addresses of the users using the abovementioned various types of terminals.

Furthermore, in this invention, an authentication part (POP authentication part 20) which authenticates whether the transmission source terminal of the abovementioned email is the registered terminal or the non-registered terminal on the basis of the abovementioned terminal discriminating information registered in the abovementioned data base when the abovementioned email is received, a mail distribution part 22 which distributes the abovementioned email to the abovementioned gateway or the abovementioned mail server on the basis of the authentication results by the abovementioned authentication part, and a mail distributing transmission part 24 which transmits the abovementioned email to the abovementioned gateway or the abovementioned mail server on the basis of the distribution results by the abovementioned mail distribution part, are disposed in the abovementioned mail distribution server.

Virus eliminating means for eliminating computer viruses incorporated into the abovementioned email are disposed in the abovementioned gateway in order to perform specified processing.

Furthermore, an SMTP server 16 which at least stores the abovementioned email in a destination directory (Fool, Foo2) and transmits the email to other destinations on the basis of the mail address of the abovementioned email, and a POP server 18 which transfers the abovementioned email stored in the abovementioned destination directory to specified terminals, are disposed in the mail server.

In this invention, session control is performed on the abovementioned mail distribution server both in cases where the email is transmitted to the abovementioned mail distribution server from the abovementioned registered terminals, and in cases where the email is transmitted to the abovementioned mail distribution server from the abovementioned non-registered terminal.

Moreover, in this invention, a non-registered mail storage part (e. g., Foo1) which stores the email that is transmitted from the non-registered terminals, and a registered mail storage part (e. g., Foo2) which stores the email that is transmitted from the registered terminals, are disposed in the destination directory, and wherein the email that is to be stored in the non-registered mail storage part (Foo1) is transferred to the registered mail storage part (Foo2), the mail address of the email, which is transmitted to an address rewriting gateway 48 by the SMTP server, is rewritten to another mail address which corresponds to the registered terminal, and the email is again transmitted to the mail distribution server, after which subjected to specified processing by the gateway, sent out to the mail server, and then stored in the registered mail storage part (Foo2).

### BRIEF DESCRIPTION OF THE DRAWINGS

Fig. 1 is a diagram which shows the overall construction of an email system constituting one embodiment of the present invention in schematic form;
Fig. 2 is a diagram which shows the construction of the mail distribution system server installed in the email system;
Fig. 3 is a diagram which shows the session control in a case where email is transmitted to the mail distribution system server from a registered terminal; and
Fig. 4 is a diagram which shows the session control in a case where email is transmitted to the mail distribution system server from a non-registered terminal.

### DESCRIPTION OF THE PREFERRED EMBODIMENTS

An email system constituting an embodiment of the present invention will be described below with reference to the attached figures.

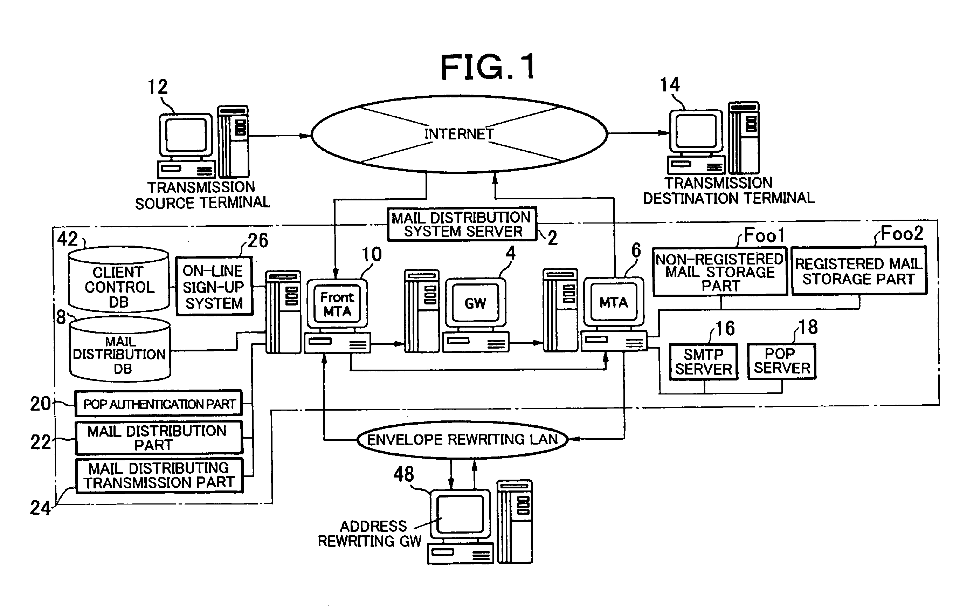

As is shown in Fig. 1, a mail distribution system server 2 which distributes email to specified destinations on the basis of terminal discriminating information for respective types of terminals constituting the transmission sources and transmission destinations of the email is disposed in the email system of the present embodiment. Furthermore, these respective types of terminals can be envisioned as (for example) computers (desktop type computers, notebook type computers or the like), mobile telephones (cellular phones, PHS (personal handyphone systems) or the like) or PDA (personal digital assistants); in the following embodiment, desktop type computers are envisions as one type of terminal.

In this email system, the mail distribution system server 2 comprises a gateway (GW) 4 which performs specified processing on the email, a mail server (MTA (message transfer agent)) 6 which transmits and receives email, a data base (mail distribution DB (data base)) 8 which registers terminal discriminating information for the respective types of terminals, and a mail distribution server (front MTA) 10 which distributes the email to either the gateway 4 or mail server 6 on the basis of the terminal discriminating information.

In such a construction, in cases where terminals for which terminal discriminating information is registered in the data base 8 are designated as registered terminals, and terminals for which terminal discriminating information is not registered in the data base 8 are designated as non-registered terminals, email that is transmitted from registered terminals is distributed to the gateway 4 by the mail distribution server 10, and is then subjected to specified processing by this gateway 4 and sent out to the mail server 6. On the other hand, mail that is transmitted from non-registered terminals is distributed to the mail server 6 by the mail distribution server 10 without being caused to pass through the gateway 4.

The terminal discriminating information contains at least the IP addresses of the respective types of terminals, and the IDs, passwords (passwords used for dial-up connections) and mail addresses of the users using the respective types of terminals.

In this case, the IP addresses consist of 32 bits of address information used to discriminate the various types of terminals in the network. For example, the IP addresses of terminals (computers) connected to an LAN or the like are fixed and do not change; however, in the case of dial-up IP connections utilizing public circuits, since the IP addresses are automatically assigned by the ISP, the IP addresses change with each connection.

The user ID is a user (client) discriminating number used inside the network system; this is not used directly by the client, but is used only to set the limits of specified processes and resources. Furthermore, the term "specified processes" refers to units that are used by the kernel of the OS (operating system) to control programs (memory control and task control) in the execution of these programs, and the term "resources" refers to software products that constitute the programs.

For example, passwords (dial-up connection passwords) are character sequences that are used to check the identity and present or absence of access authorization when internet services or personal computer communications services are utilized.

Furthermore, mail addresses are addresses in which email destinations are expressed in the form of "user name@domain name"; the mail server (MTA) 6 investigates the IP addresses of mail transmission destinations by a DNS (domain name system) using the domain names of the mail addresses, and transmits email to these destinations using an SMTP (simple mail transfer protocol).

"DNS" refers to a system which provides a service that assigns IP addresses from domain names. A DNS server (not shown in the figures) is constructed which has a correspondence table of IP addresses and domain names on the internet. For example, in the email system shown in Fig. 1, in a case where email is transmitted to the transmission destination terminal 14 from the transmission source terminal 12 via the mail distribution system server 2, an inquiry is first made in order to ascertain whether or not the IP address of the transmission destination terminal 14 is present in the DNS server closest to the transmission source terminal 12. In cases where this address is not present in this DNS server, a process is repeated in which such an inquiry is made to a higher level DNS server. Then, after a DNS server containing the IP addresses of both the transmission source terminal 12 and transmission destination terminal 14 is found, the transmission destination terminal with this IP address can be accessed by lowering the hierarchy of the DNS server from here; in this state, the transmission of email using the SMTP is possible. Furthermore, the DNS server is omitted from Fig. 1.

For example, the mail server (MTA) 6 has the functions of transmitting email transmitted from a transmission source terminal 12 to a transmission destination terminal 14 on the basis of the mail address, making a transmission confirmation as to whether or not the email has been delivered to the transmission destination terminal 14, performing re-sending processing in cases where the IP address of the transmission destination terminal 14 is unclear, in cases where there is blockage or trouble in the communications path to the transmission destination terminal 14, or in cases where there is an error such as a busy state of the transmission destination terminal 14 or the like, and sending error messages back to the transmission source terminal 12.

Moreover, an SMTP server 16 which has the function of at least storing email in destination directories (Fool, Foo2) and transmitting the email to other destinations (e. g., the transmission destination terminal 14) on the basis of the mail address of the email, and a POP (post office protocol) server 18 which transfers the email stored in the destination directories (Fool, Foo2) to specified terminals (not shown in the figures), are disposed in the mail server 6.

In the internet, email is transmitted and received via the path "transmission source terminal 12" ~ "mail server of transmission source terminal 12" ~ "mail server acting as passage on internet (i. e., mail distribution system server 2 of the present embodiment)" ~ "mail server of transmission destination terminal 14" ~ "transmission destination terminal 14". Furthermore, in Fig. 1, the mail server of the transmission source terminal 12 and the mail server of the transmission destination terminal 14 are omitted.

SMTP is the communications protocol that is used from the "transmission source terminal 12" to the "mail server of the transmission destination terminal 14" within the abovementioned path, and if email transmitted from the transmission source terminal 12 is directed toward ones own terminal, the SMTP server 16 receives this email and stores the email in the destination directory (Foo1, Foo2) on the basis of the mail address. On the other hand, if the email transmitted from the transmission source terminal 12 is not directed toward ones own terminal, the SMTP server 16 checks the destination, and transmits this email to the transmission destination terminal 14 on the basis of the mail address.

Furthermore, POP is the communications protocol that is used from the "mail server of the transmission destination terminal 14" to the "transmission destination terminal 14", and in the email system of the present embodiment, the POP server 18 transfers email stored in the directories (Foo1, Foo2) to the corresponding terminal (not shown in the figures). In cases where email stored in the directories (Foo1, Foo2) is received, an opening message is sent back from the POP server 18 when the client (terminal) accesses the mail server (MTA) 6 in POP. In this case, therefore, the client (terminal) can check whether or not an email has been delivered to its own directory (Foo1, Foo2), or can receive a desired email from the corresponding directory (Foo1, Foo2) by transmitting the user ID or password (dial-up connection password) and receiving POP confirmation.

By thus performing POP confirmation by means of the user ID or password (dial-up connection password) so that the identity of the client is confirmed prior to the transmission of an email to the client (POP before SMTP), it is possible to prevent email from being read by other clients without being blocked.

In the case of such POP confirmation, confirmation using control of the POP 3 can be performed. However, in the case of POP 3 confirmation, since the password is sent as a character sequence without being particularly encoded, it is desirable to use APOP (authenticated POP) control in which the password is encoded in order to heighten security.

In the present embodiment, terminal discriminating information for clients (e. g., the transmission source terminal 12) desiring specified processing is registered in the mail distribution DB 8 via the gateway (GW) 4. In this case, transmission source terminals 12 for which terminal discriminating information is registered in the mail distribution DB 8 are designated as registered terminals; for example, the mail address, IP address, user ID, password (dial-up connection password) and the like are registered in the mail distribution DB 8 as terminal discriminating information for each registered terminal 12. On the other hand, in cases where it is not desired to receive specified processing via the gateway (GW) 4, this terminal discriminating information is not registered in the mail distribution DB 8. Furthermore, in regard to the method used for registration in the mail distribution DB 8, it is sufficient if the registered terminals can be specified on the basis of the terminal discriminating information; accordingly, there are no particular restrictions here.

Furthermore, for example, various types of services that are newly provided to the client by the ISP besides the sending and receiving of email can be set as the specified processing that is performed by the gateway (GW) 4. In this case, examples of such various types of services include home page preparation services, link services to other contents, services that eliminate viruses incorporated into (i. e., contaminating) email, and services that prevent in advance the transmission and reception of email known as spam mail, such as unspecified broadcast advertising, chain mail and the like. In the following description, a service that eliminates computer viruses will be described as one example of specified processing.

In this case, virus eliminating means that eliminate computer viruses incorporated into email are installed in the gateway (GW) 4. In regard to this virus eliminating means, for example, a virus eliminating device can be directly constructed in the gateway (GW) 4 itself, or currently marketed virus eliminating software can be utilized, and this software can be installed. Furthermore, "InterScan VirusWall" (commercial name of a product marketed by Trend Micro K.K.) can be utilized as one example of virus eliminating software.

Furthermore, in order to execute email distribution processing, an authentication part (POP authentication part) 20 which authenticates whether the transmission source terminal of email is a registered terminal or a non-registered terminal on the basis of the terminal discriminating information registered in the mail distribution DB 8 when such email is received, a mail distribution part 22 which distributes the email to either the gateway (GW) 4 or mail server (MTA) 6 on the basis of the authentication results by the POP authentication part 20, and a mail distributing transmission part 24 which distributes and transmits the email to the gateway (GW) 4 or mail server (MTA) 6 on the basis of the distribution results by the mail distribution part 22, are disposed in the mail distribution server (front MTA) 10.

Here, the operation of the abovementioned email system (mail distribution system server 2) will be described.

In this description of the operation, a case is envisioned in which a certain client (e. g., the transmission source terminal 12) desires to receive specified processing (computer virus elimination service) via the gateway (GW) 4 at the time of concluding a new contract with a desired ISP in a state in which the abovementioned email system (i. e., mail distribution system server 2: Fig. 1) is constructed in an arbitrary ISP on the internet.

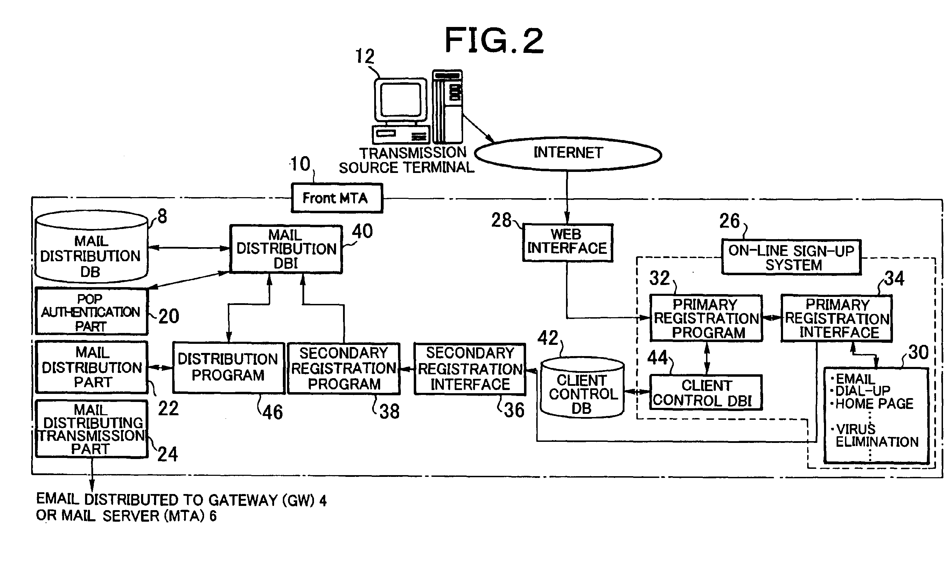

Furthermore, in regard to the method used to conclude a connection contract with the ISP, various methods such as contact by telephone, facsimile transmission and mailing of contract documents through the post and the like are conceivable. In the following description, however, a case in which a connection contract is concluded with the ISP by the web browser of the client (transmission source terminal 12) is envisioned. Accordingly, an on-line sign-up system 26 (see Figs. 1 and 2) is constructed in the mail distribution system server 2 (mail distribution server 10) of this ISP.

When the client (transmission source terminal 12) selects "virus elimination" from the various types of services at the time that a connection contract is concluded with the ISP by means of the web browser, the selection signal is transmitted to the web interface 28 of the mail distribution server 10 via the internet. The various types of service programs 30 that are provided by the ISP are registered in the on-line sign-up system 26, and the primary registration program 32 extracts the "virus elimination" program from the service programs 30 via the primary registration interface 34 on the basis of the selection signal transmitted to the web interface 28, and transmits this extracted signal to the secondary registration interface 36 from the primary registration interface 34.

Then, the secondary registration program 38 records the extracted signal transmitted to the secondary registration interface 36 in the mail distribution DB 8 via the mail distribution DBI (data base interface) 40. In this case, terminal discriminating information such as the user ID and password (dial-up connection password) that are provided to the client (transmission source terminal 12) from the ISP at the time that the connection contract with the ISP is concluded, the mail address and the like are registered in the mail distribution DB 8, and the extracted signal is recorded in the mail distribution DB 8 in association with this terminal discriminating information. As a result, the client (transmission source terminal 12) is registered in the mail distribution DB 8 as a registered terminal that desires to receive the "virus elimination service" via the gateway (GW) 4.

Furthermore, the terminal discriminating information such as the user ID and password, mail address and the like may be registered in the mail distribution DB 8 at the time of the conclusion of a contract with the ISP; alternatively, as is shown in Figs. 1 and 2, the terminal discriminating information in question may be extracted from the respective types of information registered in the client control DB 42, and this information may be registered in the mail distribution DB 8.

In Figs. 1 and 2, the contract information that is exchanged with the client (transmission source terminal 12) at the time that a connection contract with the ISP is concluded (e. g., user ID, password, mail address, name, age and occupation of the client, address, telephone number and facsimile number of the client, content of the contract and the like) is registered in the client control DB 42 in association with each client.

In this case, when the client (transmission source terminal 12) newly concludes a connection contract with the ISP, the various types of contract information described above are registered in the client control DB 42, and in cases where receiving the abovementioned "virus elimination service" is selected as an option, the primary registration program 32 extracts the corresponding terminal discriminating information from the client control DB 42 via the client control DBI 44, and registers the extracted terminal discriminating information in the mail distribution DB 8 along with the abovementioned selection signal. As a result, the client (transmission source terminal 12) is registered in the mail distribution DB 8 as a registered terminal that desires to receive the "virus elimination service".

Furthermore, services other than virus elimination, such as (for example) a home page preparation service and the like, are also available in the service program 30; it goes without saying that registration as a registered terminal that desires to receive this "home page preparation service" can also be accomplished by a process similar to that described above.

Subsequently, email that is transmitted to the mail distribution system server 2 from the transmission source terminal 12 that is a registered terminal is distributed to the gateway (GW) 4 by the mail distribution server (front MTA) 10; after virus elimination processing is performed here, this email is sent out to the mail server (MTA) 6. On the other hand, email that is transmitted from a non-registered terminal that is not registered in the mail distribution DB 8 is distributed to the mail server (MTA) 6 by the mail distribution server (front MTA) 10 without being caused to pass through the gateway (GW) 4.

In this case, conceivable methods for distributing email to the gateway (GW) 4 or mail server (MTA) 6 from the mail distribution server (front MTA) 10 also include a method in which all data of the email (header and main text) is spooled (queued) in the mail distribution server (front MTA) 10, and the email is then distributed to the gateway (GW) 4 or mail server (MTA) 6 from here. If this is done, however, it is necessary to maintain a large memory capacity in the mail distribution server (front MTA) 10; accordingly, the manufacturing cost of the mail distribution system server 2 is increased, and while the spooled (queued) email is being distributed by the mail distribution server (front MTA) 10, other email distribution processing cannot be performed, or is delayed, so that it may be impossible in some cases to ensure efficient distribution processing.

Accordingly, the mail distribution system server 2 of the present embodiment employs a method in which email is distributed to the gateway (GW) 4 or mail server (MTA) 6 from the transmission source terminal 12 via the mail distribution server (front MTA) 10 without being spooled (queued).

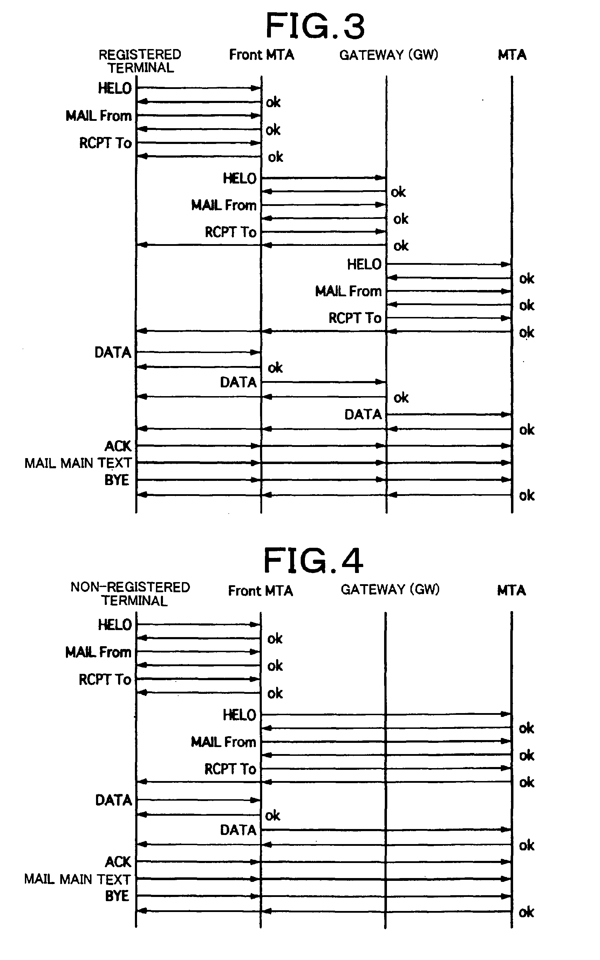

To describe this in concrete terms, in cases where email is transmitted to the mail distribution system server 2 from a registered terminal (transmission source terminal 12) (Fig. 3), or in cases where email is transmitted to the mail distribution server (front MTA) 10 from a non-registered terminal (not particularly shown in the figures) (Fig. 4), session control is performed on the mail distribution server (front MTA) 10.

First, as is shown in Figs. 3 and 4, in cases where email is transmitted to the mail distribution system server 2 from a registered terminal or non-registered terminal, a session initiating greeting of "HELO" is transmitted from the registered terminal or non-registered terminal, and the mail address "MAIL From" of the registered terminal or non-registered terminal constituting the transmission source is designated after an affirmative response (not shown in the figures) and a confirming response "ok" are received from the mail distribution server 10. Then, after the confirming response "ok" is received from the mail distribution server 10, the transmission destination (destination "RCPT To") of the email is designated, and a confirming response "ok" is received, so that session control is performed between the registered terminal or non-registered terminal and the mail distribution server 10. Furthermore, "ok" refers to the confirming response (ACK: acknowledgment) in the TCP (transmission control protocol) session.

In this session stage, the POP authentication part 20 (see Figs. 1 and 2) performs POP authentication (POP before SMTP) on the basis of the terminal discriminating information registered in the mail distribution DB 8, and the mail distribution part 22 (see Figs. 1 and 2) determines whether the email is to be distributed to the gateway (GW) 4 or mail server (MTA) 6 in accordance with the distribution program 46. In this case, the distribution program 46 accesses the mail distribution DB 8 via the mail distribution DBI 40, determines whether the confirmed terminal is a registered terminal or non-registered terminal, and controls the mail distribution part 22 on the basis of the determination results.

In cases where it is determined by the mail distribution part 22 that the terminal is a registered terminal (Fig. 3), session control is performed between the mail distributing transmission part 24 (Figs. 1 and 2) and the gateway (GW) 4; next, session control is performed between the gateway (GW) 4 and mail server (MTA) 6. Next, appropriate "DATA" indicating the transmission of the main text of the email is transmitted from the registered terminal to the gateway (GW) 4 and mail server (MTA) 6 via mail distribution server (front MTA) 10, and when a confirming response of "ok" is sent back in response to this, an acknowledgment of "ACK" is transmitted from the registered terminal, so that a session between the two is confirmed. Furthermore, "ACK" is a code with the same meaning as the confirming response of "ok"; however, different codes are used in order to distinguish between the acknowledgment and response.

In this state, the main text of the email that is transmitted to the mail distribution server (front MTA) 10 from the registered terminal is distributed and transmitted to the gateway (GW) 4 from the mail distributing transmission part 24; here, after virus elimination is performed, this is sent out to the mail server (MTA) 6.

On the other hand, in cases where it is determined by the mail distribution part 22 that the terminal is a non-registered terminal (Fig. 4), session control is performed between the mail distributing transmission part 24 and mail server (MTA) 6. Subsequently, appropriate "DATA" indicating the transmission of the main text of the email is transmitted to the mail server (MTA) 6 from the non-registered terminal via the mail distribution server (front MTA) 10, and when a confirming response of "ok" is sent back in response to this, an acknowledgment of "ACK" is transmitted from the non-registered terminal, so that a session between the two is confirmed.

In this state, the main text of the email that is transmitted to the mail distribution server (front MTA) 10 from the non-registered terminal is distributed and transmitted to the mail server (MTA) 6 without passing through the gateway (GW) 4.

Then, when a session ending "BYE" is transmitted from the registered terminal or non-registered terminal after all of the main text of the email has been distributed and transmitted to the mail server (MTA) 6, a confirming response of "ok" is sent back, thus ending the session control.

In this case, if the transmitted email is not directed toward itself, the mail server (MTA) 6 confirms the destination of the email, and this email is transmitted to the transmission destination terminal 14 by the SMTP server 16 on the basis of the mail address. On the other hand, if the transmitted email is directed toward the mail server (MTA) 6 itself, this email is received and stored in the destination directory (Foo1, Foo2) on the basis of the mail address.

In the mail distribution system server 2 of the present embodiment, a non-registered mail storage part Foo1 which stores email transmitted from non-registered terminals and a registered mail storage part Foo2 which stores email transmitted from registered terminals are disposed in the mail server (MTA) 6 as examples of destination directories.

Here, if the mail address of email transmitted from non-registered terminals (not shown in the figures) is designated as "Fool@mta-domain.com", and the address of email transmitted from registered terminals (e. g. the transmission source terminal 12) is designated as "Foo2@mta-domain.com", then the mail server (MTA) 6 can determine whether or not the email is addressed to itself by checking for the domain name of "mta-domain.com", and in cases where the email is addressed to itself, this email is stored in the corresponding destination directories (non-registered mail storage part Foo1 and registered mail storage part Foo2: Fig. 1) in accordance with the account names "Foo1" and "Foo2" of these mail addresses. In this case, email with the mail address of "Fool@mta-domain.com" is stored in the non-registered mail storage part Foo1 without virus elimination being performed; on the other hand, email with the mail address of "Foo2@mta-domain.com" is stored in the registered mail storage part Foo2 in a state in which virus elimination has been performed.

In a state in which email is successively stored in corresponding directories (Foo1, Foo2), if a certain client (not shown in the figures) transmits a command (e. g., via POP) of "transfer email stored in the non-registered mail storage part Foo1 (mail address: Fool@mta-domain.com) to the registered mail storage part Foo2" to the mail distribution system server 2, the mail server (MTA) 6 executes transfer processing in accordance with this command. Since the email stored in the non-registered mail storage part Foo1 has not been subjected to virus elimination, if such email is transferred to the registered mail storage part Foo2, then email that has been subjected to virus elimination and email that has not been subjected to virus elimination are mixed in the registered mail storage part Foo2.

In the initial setting, only email that has been subjected to virus elimination is stored in the registered mail storage part Foo2; email that is received from the registered mail storage part Foo2 by POP is all email that is not contaminated with any virus. However, if email that has not been subjected to virus elimination is mixed as described above, then email contaminated with a virus is transferred to the client "as is"; as a result, cases may be envisioned in which this causes trouble in the client's system.

Accordingly, in the email system of the present embodiment, a construction is used which is devised so that in cases where email stored in the non-registered mail storage part Foo1 is transferred to the registered mail storage part Foo2, this transfer to the registered mail storage part Foo2 is accomplished after this email has been subjected to virus elimination.

As an example of this construction, an address rewriting gateway (GW) 48 constructed in an envelope rewriting LAN is disposed in the email system as shown in Fig. 1. Here, the term "envelope" refers to mail address information such as the transmission source and transmission destination.

In such a construction, in cases where email stored in the non-registered mail storage part Foo1 (transmission source mail address: Fool@mta-domain.com) is to be transferred to the registered mail storage part Foo2, the mail server (MTA) 6 rewrites the mail address of this email to a substitute address of the address rewriting gateway (GW) 48 (e. g., Foo2@ex.mta-domain.com), and this email is transmitted to the address rewriting gateway (GW) 48 via SMTP server 16 on the basis of this substitute address.

The address rewriting gateway (GW) 48 rewrites the substitute address (Foo2@ex.mta-domain.com) to the transmission destination address (Foo2@mta-domain.com), and transmits this to the mail distribution server (front MTA) 10. In this case, since the transmission destination address corresponds to the destination of the email that is transmitted from the registered terminal (registered mail storage part Foo2), the email that is transmitted to the mail distribution server (front MTA) 10 is distributed and transmitted to the gateway (GW) 4 or mail server (MTA) 6, and is then stored in the destination registered mail storage part Foo2.

Since this email has not been subjected to virus elimination, email that has been transmitted to the mail distribution server (front MTA) 10 from the address rewriting gateway (GW) 48 must be distributed to the gateway (GW) 4 in order to prevent email that has not been subjected to virus elimination from being mixed with the registered mail storage part Foo2.

For example, the method used to distribute the email to the gateway (GW) 4 may be a method in which the terminal discriminating information of the address rewriting gateway (GW) 48 is registered beforehand in the mail distribution DB 8. If this is done, email that is transmitted from the address rewriting gateway (GW) 48 to the mail distribution server (front MTA) 10 may be viewed as being the same as email that is transmitted from registered terminals, so that the mail distribution server (front MTA) 10 distributes and transmits this email to the gateway (GW) 4. As a result, email that has been subjected to virus elimination is stored in the registered mail storage part Foo2. Specifically, the email stored in the non-registered mail storage part Foo1 is transferred to the registered mail storage part Foo2 in a state in which virus elimination has been performed, so that there is no mixing of email that has been subjected to virus elimination and email that has not been subjected to virus elimination in the registered mail storage part Foo2.

Thus, in the present embodiment, for example, even in cases where an attempt is made to develop a new service such as a virus elimination service or the like, there is no need to add a server for this new service (i. e., a virus checking server) as in a conventional system, and such a new service can be provided using an existing system (email system) "as is" merely by installing virus elimination software in the gateway (GW) 4.

Furthermore, for example, even in cases where clients who have concluded contracts with an existing email system receive a new service such as virus elimination or the like in the middle of the contract period, there is no need for the conclusion of a new contract with the virus checking server or the trouble and cost of resetting the mail system between the terminal and the virus checking server as in a conventional system; the provision of such a new service can be received easily and inexpensively merely by concluding a connection contract with the ISP on the web browser of the client.

Furthermore, even in cases where email stored in the directories (Fool, Foo2) of the mail server (MTA) 6 is transferred between directories, such email transfer can be performed without any mixing of email that has been subjected to virus elimination and email that has not been subjected to email elimination, by causing the data to pass through an address rewriting gateway (GW) 48 constructed in an envelope rewriting LAN.

Furthermore, in the abovementioned embodiment, a case is described in which the client desired to receive a virus elimination service via the gateway (GW) 4 at the time of concluding a new connection contract with the ISP. However, even in cases where a virus elimination service is to be newly received after a connection contract has already been concluded, a virus elimination service can subsequently be received merely by selecting "virus elimination" from various types of services displayed on the web browser.

Furthermore, in the abovementioned embodiment, a case is described in which email stored in the non-registered mail storage part Foo1 is transferred to the registered mail storage part Foo2. However, in cases where email is conversely transferred from the registered mail storage part Foo2 to the non-registered mail storage part Foo1, there is no problem even if email that has been subjected to virus elimination and email that has not been subjected to virus elimination are mixed in the non-registered mail storage part Foo1. Accordingly, in the case of such data transfer, for example, email can be directly transferred from the registered mail storage part Foo2 to the non-registered mail storage part Foo1 by the mail server (MTA) 6 without being caused to pass through such an envelope rewriting LAN.

The present invention is an email system which has an email distribution system server that distributes email to specified addresses on the basis of terminal discriminating information for various types of terminals (12, 14) constituting the transmission sources and transmission destinations of the email. The email distribution system server 2 has a gateway (GW) 4 which performs specified processing on the email, a mail server (MTA) 6 which performs the transmission and reception of the email, a data base (e. g., a DB for mail distribution use) 8 which registers the terminal discriminating information for the various types of terminals, and a mail distribution server (Front MTA) 10 which distributes the email to the gateway or the mail server on the basis of the terminal discriminating information. As a result, a new service can be provided while utilizing an existing system "as is".

## Claims

1. An email system which has an email distribution system server that distributes email to specified addresses on the basis of terminal discriminating information for various types of terminals constituting the transmission sources and transmission destinations of said email, said email distribution system server comprising:
a gateway which performs specified processing on said email;
a mail server which performs the transmission and reception of said email;
a data base which registers the terminal discriminating information for said various types of terminals; and
a mail distribution server which distributes said email to said gateway or said mail server on the basis of said terminal discriminating information;
wherein terminals for which said terminal discriminating information is registered in said data base are designated as registered terminals, and terminals for which said terminal discriminating information is not registered in said data base are designated as non-registered terminals, and
wherein said email that is transmitted from said registered terminals is distributed to said gateway by said mail distribution server, and is then subjected to specified processing by said gateway and sent out to said mail server, and said email that is transmitted from said non-registered terminals is distributed to said mail server by said mail distribution server without being caused to pass through said gateway.

2. The email system according to claim 1, wherein said terminal discriminating information contains at least the IP addresses of said various types of terminals, and the user IDs, passwords and mail addresses of the users using said various types of terminals.

3. The email system according to claim 1 or 2, wherein said mail distribution server comprises an authentication part which authenticates whether the transmission source terminal of said email is said registered terminal or said non-registered terminal on the basis of said terminal discriminating information registered in said data base when said email is received, a mail distribution part which distributes said email to said gateway or said mail server on the basis of the authentication results by said authentication part, and a mail distributing transmission part which transmits said email to said gateway or said mail server on the basis of the distribution results by said mail distribution part.

4. The email system according to any one of claims 1 to 3, wherein said gateway comprises a virus eliminating means for eliminating computer viruses incorporated into said email in order to perform specified processing.

5. The email system according to any one of claims 1 to 4, wherein said mail server comprises an SMTP server which at least stores said email in a destination directory and transmits the email to other destinations on the basis of the mail address of said email, and a POP server which transfers said email stored in said destination directory to specified terminals.

6. The email system according to claim 5, wherein session control is performed on said mail distribution server both in cases where said email is transmitted to said mail distribution server from said registered terminals, and in cases where said email is transmitted to said mail distribution server from said non-registered terminals.

7. The email system according to claim 5, wherein said destination directory comprises a non-registered mail storage part which stores said email that is transmitted from said non-registered terminals, and a registered mail storage part which stores said email that is transmitted from said registered terminals, and wherein said email that is to be stored in said non-registered mail storage part is transferred to said registered mail storage part, the mail address of said email, which is transmitted to an address rewriting gateway by said SMTP server, is rewritten to another mail address which corresponds to said registered terminal, and said email is again transmitted to said mail distribution server, after which subjected to specified processing by said gateway, sent out to said mail server, and then stored in said registered mail storage part.
